# EUROPÄISCHE PATENTANMELDUNG

(11) **EP 2 110 957 A2**
(43) Veröffentlichungstag der Anmeldung: **21.10.2009**
(21) Anmeldenummer: 09450066.7
(22) Anmeldetag: 27.03.2009
(51) Int. Cl.: H04B 1/40

(54) **Verfahren und System zur Kopplung einer analogen Funkeinrichtung und einer digitalen Funkeinrichtung**

(30) Priorität: 17.04.2008 AT 6132008
(71) Anmelder: Center Communication Systems GmbH, 1210 Wien (AT)
(72) Erfinder: Wolf, Robert, 3040 Neulengbach (AT); Freitag, Erich, 1190 Wien (AT)
(74) Vertreter: Miksovsky, Alexander

(57) **Zusammenfassung**

Bei einem Verfahren sowie System zur Kopplung einer analogen Funkeinrichtung (8) und einer davon getrennten, digitalen Funkeinrichtung (2), insbesondere einer analogen und einer digitalen Zugfunkeinrichtung, welche jeweils ein analoges und digitales Steuergerät beinhalten oder damit verbunden werden, ist vorgesehen, daß die für eine Bedienung erforderlichen Daten, Parameter, etc. über eine gemeinsame, für einen digitalen Betrieb vorgesehene Bedieneinrichtung (1) eingegeben werden und daß die für einen Betrieb der analogen Funkeinrichtung (8) erforderlichen Signale über eine getrennte Schnittstelle (15) dem analogen Steuergerät und/oder der analogen Funkeinrichtung (8) zugeführt werden, so daß eine zuverlässige und insbesondere kostengünstige Kopplung zwischen einem digitalen und einem analogen Funksystem ermöglicht wird. (Fig. 2)

## Beschreibung

Die vorliegende Erfindung bezieht sich auf ein Verfahren zur Kopplung einer analogen Funkeinrichtung und einer davon getrennten, digitalen Funkeinrichtung, insbesondere einer analogen und einer digitalen Zugfunkeinrichtung, welche jeweils ein analoges und digitales Steuergerät beinhalten oder damit verbunden werden. Die Erfindung bezieht sich weiters auf ein System zur Kopplung einer analogen Funkeinrichtung und einer davon getrennten, digitalen Funkeinrichtung, insbesondere einer analogen und einer digitalen Zugfunkeinrichtung, welche jeweils ein analoges und digitales Steuergerät beinhalten oder damit verbindbar sind.

Neben zunehmend zum Einsatz gelangenden digitalen Funkeinrichtungen für eine Sprach- und Datenkommunikation für einzelne Teilnehmer eines derartigen Funksystems ist es beispielsweise im Zusammenhang mit Bahnorganisationen bekannt, daß neben einer Umrüstung bzw. Umstellung auf digitale Funkverbindungen insbesondere zwischen einzelnen Zügen, zwischen Zügen und Bahnhöfen und Zügen und Leitstellen auch bestehende analoge Funkeinrichtungen unverändert beibehalten bzw. aufrecht erhalten werden bzw. werden müssen, da eine Umrüstung von analogen Funkeinrichtungen auf digitale Funkeinrichtungen in großen Bereichen nicht in entsprechend kurzer Zeit vorgenommen werden kann. Darüber hinaus existieren bei Einsatz von Geräten in einem grenzüberschreitenden Betrieb insbesondere länderweise Unterschiede betreffend den Zeitplan einer Umstellung als auch das Ausmaß einer derartigen Umstellung von analogen auf digitale Funkverbindungen. Weiters ist davon auszugehen, daß sich die Lebensdauer von Einrichtungen, wie sie im Zugsverkehr in Einsatz gelangen, über mehrere Jahrzehnte erstreckt, so daß eine Vielzahl von Einrichtungen, beispielsweise Zügen und Triebwägen noch über vergleichsweise längere Zeiträume im Einsatz stehen werden, welche bei Inbetriebnahme üblicherweise lediglich mit analogen Funkeinrichtungen ausgerüstet sind bzw. waren. Darüber hinaus ist im Zusammenhang mit einem Einsatz von derartigen Funkeinrichtungen in einem Zugsverkehr davon auszugehen, daß Züge entsprechende Strecken nur befahren dürfen, wenn sie über die auf derartigen Strecken zum Einsatz gelangende Technologie zur Kommunikation verfügen.

Im Zusammenhang mit den obigen Anforderungen, wonach länderweise gegebenenfalls stark unterschiedlich unverändert über längere Zeiträume analoge Funkeinrichtungen und digitale, davon getrennte Funkeinrichtungen gleichzeitig zum Einsatz gelangen müssen und in unterschiedlichen Ländern üblicherweise unterschiedliche Anforderungen betreffend eine analoge Verbindung insbesondere im Zugsverkehr vorgesehen sind, wurde beispielsweise vorgeschlagen, bestehende, analoge Funkeinrichtungen vollständig zu entfernen und durch neue, sogenannte Dual-Mode-Geräte zu ersetzen, welche insbesondere länderspezifisch für einen analogen Funkeinsatz als auch einen digitalen Funkeinsatz verwendbar sind. Hiebei ist insbesondere nachteilig, daß eine vollständige Umrüstung und somit ein vollständiger Ersatz von insbesondere für den unverändert erforderlichen, analogen Funkbetrieb erforderlichen Einrichtungen und Systemen bei entsprechend erhöhtem Kostenaufwand vorzusehen ist, wobei darüber hinaus unter Berücksichtung länderspezifischer Erfordernisse für einen analogen Funkbetrieb auch eine entsprechend große Vielzahl von unterschiedlichen Dual-Mode-Geräten oder entsprechend komplexe Geräte insbesondere für einen Einsatz in mehreren Ländern vorgesehen bzw. bereitgestellt werden muß bzw. müssen. Darüber hinaus ist bei derartigen Dual-Mode-Geräten nachteilig, daß diese neuerlich bei einem Umschalten bzw. einer Umstellung auf einen reinen digitalen Funkeinsatz umgebaut oder vollständig ersetzt werden müssen.

Die vorliegende Erfindung zielt daher darauf ab, ein Verfahren sowie ein System der eingangs genannten Art dahingehend weiterzubilden, daß in einfacher und zuverlässiger Weise eine Kopplung einer analogen Funkeinrichtung und einer davon getrennten Funkeinrichtung bei insbesondere verringertem Kostenaufwand für den gleichzeitigen Einsatz bzw. die gleichzeitige Verwendung derartiger analoger Funkeinrichtungen und digitaler Funkeinrichtungen möglich wird. Weiters wird auf eine einfache und kostengünstige Umstellung bzw. Umrüstung von einem lediglich analogen Betrieb auf einen Dual-Mode-Betrieb unter Einsatz von analogem und digitalem Funk und gegebenenfalls in weiterer Folge auf lediglich digitalen Funkbetrieb abgezielt.

Zur Lösung dieser Aufgaben ist ein Verfahren der eingangs genannten Art im wesentlichen dadurch gekennzeichnet, daß die für eine Bedienung erforderlichen Daten, Parameter, etc. über eine gemeinsame, für einen digitalen Betrieb vorgesehene Bedieneinrichtung eingegeben werden und daß die für einen Betrieb der analogen Funkeinrichtung erforderlichen Signale über eine getrennte Schnittstelle dem analogen Steuergerät und/oder der analogen Funkeinrichtung zugeführt werden. Dadurch, daß erfindungsgemäß eine gemeinsame, für einen digitalen Betrieb vorgesehene Bedieneinrichtung zur Eingabe der erforderlichen Daten, Parameter, etc. vorgesehen wird und Signale für den Betrieb der bzw. einer analogen Funkeinrichtung über eine getrennte Schnittstelle zu der Einheit bzw. den Elementen für den analogen Funkbetrieb zur Verfügung gestellt werden, ist es im wesentlichen lediglich notwendig, ein entsprechendes Bediengerät für den üblicherweise zusätzlich zur Verfügung stellenden digitalen Funkbetrieb und eine zusätzliche getrennte Schnittstelle bereitzustellen und vorzusehen, welche einen gegenüber einem vollständigen Ersatz bzw. einer vollständigen Bereitstellung eines vollständigen Systems für einen analogen Funkbetrieb bedeutend geringeren Kostenaufwand erfordert, so daß die für den digitalen Funkbetrieb vorgesehene Bedieneinrichtung auch die für einen analogen Funkbetrieb einzusetzenden Elemente steuert bzw. regelt bzw. mit Signalen, Daten, etc. versorgt. Die für den digitalen Betrieb zur Verfügung zu stellende Bedieneinrichtung ist somit gegebenenfalls mit zusätzlichen Eingabemöglichkeiten bzw. - funktionen zur Durchführung des analogen Funkbetriebs zu versehen, wobei die für den analogen Funkbetrieb zur Verfügung zu stellenden Signale entsprechend einfach über die getrennte Schnittstelle den Komponenten für den analogen Funkbetrieb bereitgestellt werden.

Für eine besonders zuverlässige und einfache Kopplung der gemeinsamen Bedieneinrichtung mit den Elementen für einen analogen Funkbetrieb wird gemäß einer bevorzugten Ausführungsform vorgeschlagen, daß die für den Betrieb der analogen Funkeinrichtung erforderlichen Signale in Abhängigkeit von den an der Bedieneinrichtung eingegebenen Daten, Parameter, etc. in der Bedieneinrichtung oder in dem digitalen Steuergerät generiert werden und anschließend über die getrennte Schnittstelle dem analogen Steuergerät und/oder der analogen Funkeinrichtung zugeführt werden. Bei Vorsehen einer Kopplung über die getrennte Schnittstelle unmittelbar zwischen der Bedieneinrichtung und den Elementen für einen analogen Funkbetrieb, insbesondere dem analogen Steuergerät und/oder der analogen Funkeinrichtung ist erforderlich, daß bereits in der Bedieneinrichtung entsprechende Zusatzfunktionen enthalten sind, welche die für einen analogen Funkbetrieb und einen digitalen Funkbetrieb unterschiedlichen Bedienabläufe handhaben bzw. abwickeln können, so daß in der Bedieneinrichtung in diesem Fall auch eine Umschaltung zwischen dem analogen und digitalen Betriebsmodus erfolgt. Bei Vorsehen einer Kopplung über die getrennte Schnittstelle zu den Elementen für einen analogen Funkbetrieb ausgehend von den für den digitalen Funkbetrieb vorzusehenden Elementen, insbesondere des digitalen Steuergeräts oder der digitalen Funkeinrichtung sind in diesen Elementen für den digitalen Funkbetrieb die für eine Behandlung der unterschiedlichen Bedienabläufe vorzusehenden Elemente bzw. die erforderliche Software insbesondere im digitalen Steuergerät enthalten, wobei auch in diesem eine Unterscheidung zwischen den einzelnen Betriebsbereichen bzw. -moden, eine Umschaltfunktion und weitere ähnliche Funktionen enthalten sind.

Gemäß einer weiters bevorzugten Ausführungsform wird erfindungsgemäß vorgeschlagen, daß die für einen digitalen Betrieb vorgesehene Bedieneinrichtung und das digitale Steuergerät sowie die digitale Funkeinrichtung mit einer bestehenden analogen Funkeinrichtung und/oder einem bestehenden analogen Steuergerät gekoppelt werden. Es wird somit mit dem erfindungsgemäßen Verfahren möglich, insbesondere eine bestehende, analoge Funkeinrichtung mit einer insbesondere zusätzlich vorzusehenden digitalen Funkeinrichtung zu koppeln, so daß im Hinblick auf entsprechende Kosteneinsparungen üblicherweise bis auf einen Ersatz der Bedieneinrichtung für die ursprünglich vorhandene bzw. bereits bestehende, analoge Funkeinrichtung, welche durch die Bedieneinrichtung für einen digitalen Betrieb ersetzt wird, sämtliche Komponenten des bestehenden, analogen Funksystems unverändert beibehalten bzw. weiter verwendet werden können, da sie, wie oben bereits ausgeführt, über die getrennte Schnittstelle mit den für den Betrieb der analogen Funkeinrichtung erforderlichen Signalen, Daten, etc. versorgt werden. Sollte in weiterer Folge gegebenenfalls eine Umrüstung bzw. Umstellung in rein digitalen Betrieb gewünscht werden, so können die für den analogen Betrieb erforderlichen Komponenten einfach entfernt werden, ohne den digitalen Betrieb zu beeinflussen oder weitere Arbeiten bzw. Aufwendungen zu erfordern.

Für eine besonders einfache und zuverlässige Kopplung wird in diesem Zusammenhang gemäß einer weiters bevorzugten Ausführungsform vorgeschlagen, daß die Eingabe der für den Betrieb der analogen Funkeinrichtung erforderlichen Signale über einen Eingang vorgenommen wird, über welchen die analoge Funkeinrichtung und/oder das analoge Steuergerät ursprünglich mit einer analogen Bedieneinrichtung gekoppelt wurden, so daß unmittelbar ersichtlich ist, daß die für den bestehenden, analogen Funkbetrieb vorgesehenen Komponenten und Funktionen unverändert auch nach der Kopplung mit dem digitalen Funksystem beibehalten bzw. weiterverwendet werden können. Alternativ kann auch eine getrennte Schnittstelle zum Einsatz gelangen.

Wie oben bereits erwähnt, sind eine Auswahl zwischen analogem und digitalem Funkbetrieb, gegebenenfalls eine Umschaltung sowie weitere Auswahl- bzw. Umschaltfunktionen vorzusehen, wobei in diesem Zusammenhang darüber hinaus vorgeschlagen wird, daß eine Regelung bzw. Steuerung eines gegebenenfalls überlappenden, analogen und digitalen Betriebsmodus, ein Umschalten und ein gegebenenfalls erforderliches Rücksetzen der Funkeinrichtungen in der für die Generierung der für den Betrieb der analogen Funkeinrichtung erforderlichen Signale vorgesehenen Vorrichtung durchgeführt werden, wie dies einer weiters bevorzugten Ausführungsform des erfindungsgemäßen Verfahrens entspricht.

Zur Lösung der eingangs genannten Aufgaben ist darüber hinaus ein System der oben genannten Art im wesentlichen dadurch gekennzeichnet, daß für eine Übermittlung von für einen Betrieb der analogen Funkeinrichtung erforderlichen Signalen eine getrennte Schnittstelle für eine Kopplung mit dem analogen Steuergerät und/oder der analogen Funkeinrichtung vorgesehen ist. Wie oben bereits erwähnt, gelingt somit durch Bereitstellung einer kostengünstigen, getrennten Schnittstelle unmittelbar eine Kopplung zwischen der für den digitalen Funkbetrieb vorgesehenen Bedieneinrichtung als auch der analogen Funkeinrichtung bzw. dem analogen Steuergerät des analogen Funksystems.

Für eine besonders zuverlässige Übertragung der Signale, Daten, etc. zu der analogen Funkeinrichtung bzw. dem analogen Steuergerät wird gemäß einer weiters bevorzugten Ausführungsform vorgeschlagen, daß die Kopplung der analogen Funkeinrichtung bzw. des analogen Steuergeräts mit der digitalen Bedieneinrichtung oder dem digitalen Steuergerät erfolgt.

Besondere Kosteneinsparungen lassen sich hiebei darüber hinaus dadurch erzielen, daß eine bestehende, analoge Funkeinrichtung und/oder ein bestehendes, analoges Steuergerät mit der digitalen Bedieneinrichtung oder dem digitalen Steuergerät koppelbar bzw. verbindbar ist, wie dies einer weiters bevorzugten Ausführungsform des erfindungsgemäßen Systems entspricht.

Für eine besonders zuverlässige Kopplung wird darüber hinaus gemäß einer weiters bevorzugten Ausführungsform vorgeschlagen, daß die getrennte Schnittstelle in einer getrennten Hardwareeinheit ausgebildet ist, welche der analogen Funkeinrichtung oder dem analogen Steuergerät vorgeschaltet ist. Wie oben bereits erwähnt, gelangen beispielsweise in unterschiedlichen Ländern unterschiedliche analoge Funksysteme zum Einsatz, so daß in Anpassung an derartige, gegebenenfalls unterschiedliche Anforderungen in einfacher Weise lediglich eine einfache und kostengünstige Anpassung der getrennten Schnittstelle ausreichend ist, um derartigen, gegebenenfalls unterschiedlichen Anforderungen Rechnung tragen zu können. Es kann somit mit einer im wesentlichen für eine Vielzahl von unterschiedlichen Ländern, beispielsweise jeweils gleichartig auszubildenden, digitalen Funkeinrichtung sowie einer zugehörigen Bedieneinrichtung das Auslangen gefunden werden, wobei in Anpassung an länderweise unterschiedliche getrennte Schnittstellen lediglich einfache Adaptierungen beispielsweise in der digitalen Bedieneinrichtung oder im digitalen Steuergerät für eine entsprechende Steuerung bzw. Regelung der damit zu koppelnden Elemente des analogen, insbesondere bestehenden und weiter verwendbaren Funksystems, insbesondere der analogen Funkeinrichtung und/oder des analogen Steuergeräts ausreichend sind. Alternativ könnte die getrennte bzw. zusätzliche Schnittstelle in der digitalen Funkeinrichtung bzw. dem digitalen Steuergerät enthalten sein.

Für eine besonders einfache und zuverlässige Übertragung der Daten zwischen den einzelnen Elementen des erfindungsgemäßen Systems ist darüber hinaus gemäß einer weiters bevorzugten Ausführungsform vorgesehen, daß für eine Übermittlung von Signalen zwischen der Bedieneinrichtung und den Steuergeräten ein CAN-Bus vorgesehen ist.

Die Erfindung wird nachfolgend anhand von in der beiliegenden Zeichnung schematisch dargestellten Ausführungsbeispielen näher erläutert. In dieser zeigen:
Fig. 1 eine schematische Darstellung einer ersten Ausführungsform eines erfindungsgemäßen Systems zur Durchführung des erfindungsgemäßen Verfahrens zur Kopplung einer analogen Funkeinrichtung und einer davon getrennten digitalen Funkeinrichtung; und
Fig. 2 ist in einer zu Fig. 1 ähnlichen Darstellung eine abgewandelte Ausführungsform eines erfindungsgemäßen Systems zur Durchführung des erfindungsgemäßen Verfahrens.

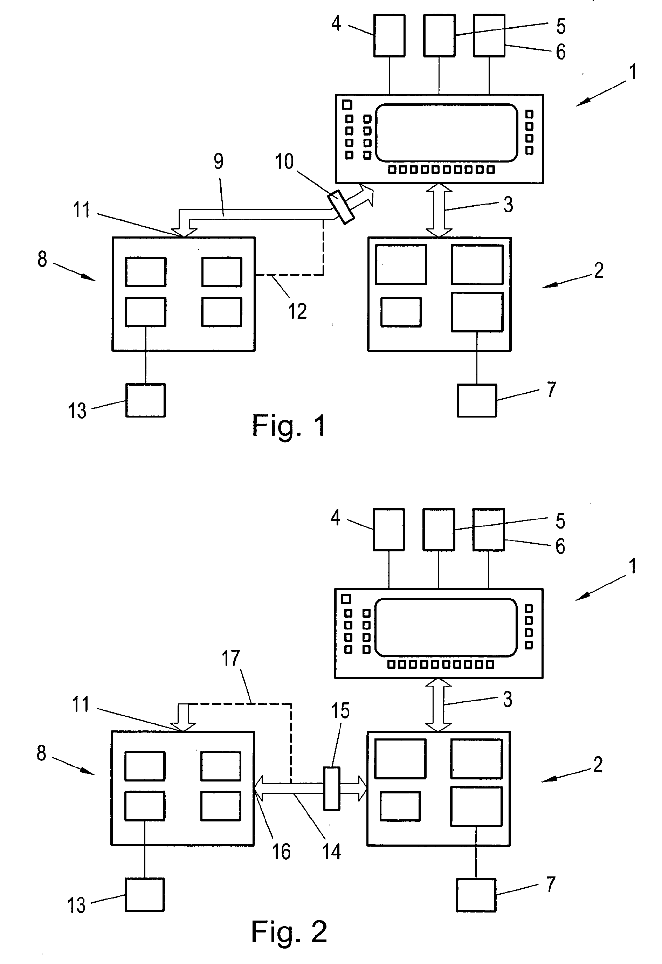

In der in Fig. 1 dargestellten Ausführungsform ist eine allgemein mit 1 bezeichnete Bedieneinrichtung für eine allgemein mit 2 bezeichnete, digitale Funkeinrichtung vorgesehen, wobei eine Kopplung zwischen dem Bediengerät 1 und der Funkeinrichtung 2, welche integriert ein entsprechendes, digitales Steuergerät beinhaltet bzw. damit gekoppelt ist, über eine schematisch mit 3 angedeuteten Verbindung erfolgt.

Mit dem Bediengerät bzw. der Bedieneinrichtung sind darüber hinaus zusätzliche Einrichtungen 4, 5 und 6 gekoppelt bzw. koppelbar, wobei 4 beispielweise von einem Handapparat, beispielsweise einer Hör/Sprecheinrichtung, 5 von einem Lautsprecher und 6 von einem Schalter bzw. einer Umschalteinrichtung gebildet sein kann, wie sie beispielweise bei einem Einsatz des in Fig. 1 dargestellten Systems im Zusammenhang mit einer Zugfunkeinrichtung üblicherweise verwendet werden.

Neben einer Mehrzahl von üblicherweise in einer digitalen Funkeinrichtung 2 enthaltenen Modulen bzw. Elementen, welche allgemein bekannt sind und im vorliegenden Fall nicht näher beschrieben werden, ist eine mit dem digitalen Funksystem bzw. der digitalen Einrichtung 2 gekoppelte Antenne darüber hinaus mit 7 angedeutet.

Zur Kopplung mit einer allgemein mit 8 bezeichneten, analogen Funkeinrichtung, welche ähnlich der Funkeinrichtung 2 für einen digitalen Betrieb ein analoges Steuergerät beinhaltet bzw. damit gekoppelt ist, ist eine schematisch mit 9 angedeutete Verbindung zwischen der für einen digitalen Betrieb vorgesehenen Bedieneinrichtung 1 und dem für einen analogen Betrieb vorgesehenen Funksystem 8 angedeutet, wobei die Kopplung über eine getrennte und mit 10 angedeutete Schnittstelle erfolgt.

Die Schnittstelle 10 kann hiebei von einer getrennten Hardwareeinheit gebildet sein, welche insbesondere auf eine beispielsweise bereits bestehende Anlage bzw. Einrichtung 8 für einen analogen Funkbetrieb abgestimmt ist und somit die Umsetzung der jeweiligen proprietären Schnittstelle des bestehenden, analogen Zugfunkgeräts 8 auf die jeweilige Systemschnittstelle des digitalen Zugfunkgeräts, und bei der Ausbildung gemäß Fig. 1 insbesondere der digitalen Bedieneinrichtung 1 bewerkstelligt bzw. zur Verfügung stellt.

Die in Fig. 1 darstellte Verbindung bzw. Anbindung 9 der analogen Funkeinrichtung 8 an die digitale Bedieneinrichtung 1 erfolgt hiebei beispielsweise über einen bestehenden Eingang bzw. eine bestehende Schnittstelle des analogen Funksystems 8, welche(r) mit 11 angedeutet ist, und an welchem(r) eine durch Ergänzung mit den Elementen 1, 2 für eine digitale Funkverbindung nicht mehr erforderliche Bedieneinrichtung für den analogen Funkbetrieb angeschlossen worden war.

Anstelle der Kopplung über den Eingang 11, welcher insbesondere zur Verbindung mit der nicht mehr erforderlichen Bedieneinrichtung für einen analogen Funkbetrieb zum Einsatz gelangte, kann eine Kopplung zwischen der Bedieneinrichtung 1 und der Einrichtung 8 für einen analogen Funkbetrieb auch über einen zusätzlichen Eingang bzw. eine zusätzliche Schnittstelle über eine strichliert mit 12 angedeutete Verbindung erfolgen.

Ähnlich wie bei der Einrichtung 2 für einen digitalen Funkbetrieb ist für die Einrichtung 8 für einen analogen Funkbetrieb eine Antenne mit 13 angedeutet.

Darüber hinaus enthält die Einrichtung 8 für einen analogen Funkbetrieb ähnlich wie die Einrichtung 2 für einen digitalen Funkbetrieb eine Mehrzahl von an sich bekannten und lediglich schematisch angedeuteten Modulen bzw. Elementen, welche im vorliegenden Fall nicht näher erörtert werden.

Bei einer Kopplung zwischen der für einen digitalen Funkbetrieb vorgesehenen Bedieneinrichtung 1 und dem Element 8 für einen analogen Funkbetrieb ist es, wie oben bereits kurz angedeutet, erforderlich, daß in der Bedieneinrichtung 1 entsprechende Zusatzfunktionen enthalten sind, um unterschiedliche Bedienabläufe bzw. einen Einsatz in analogem Funkbetrieb als auch digitalem Funkbetriebe abwickeln zu können. Es muß somit im Rahmen der Bedieneinrichtung 1 auch eine Umschaltung zwischen analogem und digitalem Betriebsmodus vorgesehen sein.

Bei der in Fig. 2 dargestellten Ausführungsform sind für gleiche Elemente bzw. Bauteile die Bezugszeichen der Fig. 1 beibehalten worden.

So ist wiederum eine mit 1 bezeichnete Bedieneinrichtung über eine Verbindung 3 mit einer Einrichtung 2 für einen digitalen Funkbetrieb gekoppelt.

Im Gegensatz zu der Ausführungsform gemäß Fig. 1 erfolgt jedoch bei der Ausführungsform gemäß Fig. 2 eine Kopplung mit der wiederum mit 8 bezeichneten Einrichtung für einen analogen Funkbetrieb nicht direkt zwischen der digitalen Bedieneinrichtung 1 und der Einrichtung 8, sondern es ist eine Verbindung 14 zwischen der Einrichtung 2 für den digitalen Funkbetrieb und der Einrichtung 8 für den analogen Funkbetrieb vorgesehen, wobei für die Ankopplung eine mit 15 bezeichnete, wiederum getrennte Schnittstelle vorgesehen ist.

Bei der in Fig. 2 gezeigten Ausführungsform erfolgt eine Kopplung vorrangig über einen mit 16 bezeichneten Eingang an der Einrichtung 8 für den analogen Funkbetrieb.

Anstelle eines Einsatzes eines derartigen zusätzlichen Eingangs 16 kann jedoch ähnlich wie bei der Ausführungsform gemäß Fig. 1 auch eine Ankopplung wiederum über den mit 11 bezeichneten Eingang gemäß der strichliert angedeuteten Verbindung 17 erfolgen, welcher ursprünglich für die Kopplung mit einer analogen Bedieneinrichtung verwendet wurde.

Bei der Ausführungsform gemäß Fig. 2 ist gegenüber der in Fig. 1 darstellten Ausführungsform insbesondere vorteilhaft, daß die Bedieneinrichtung 1 nicht, wie oben angeführt, entsprechende Zusatzfunktionen enthalten muß, so daß insbesondere kein zusätzlicher Anschluß bzw. keine zusätzliche Anbindung an der Bedieneinrichtung 1 für die Kopplung mit der Einrichtung 8 für den analogen Funkbetrieb erforderlich ist.

Die für eine Behandlung der unterschiedlichen Betriebsmoden, eine Umschaltung zwischen analogem und digitalem Funkgerät 2 bzw. 8, eine Regelung bzw. Steuerung von gegebenenfalls überlappenden Betriebsmoden, ein kontrolliertes Hochfahren und insbesondere ein Reset-Verhalten erforderlichen Funktionen und Elemente sowie ähnliche Funktionen sind bei der in Fig. 2 dargestellten Ausführungsform jeweils in der Einrichtung 2 für den digitalen Funkbetrieb und insbesondere in dem digitalen Steuergerät enthalten, welches einen Bestandteil der Einrichtung 2 bildet, so daß die für eine Kopplung mit der insbesondere bereits bestehenden Einrichtung 8 für einen analogen Funkbetrieb, welche, wie oben bereits mehrfach ausgeführt, gegebenenfalls unterschiedliche und länderspezifische Anforderungen erfüllen muß, erforderlichen Funktionen und/oder Elemente in einfacher Weise in das Steuergerät der Einrichtung 2 und/oder in die damit zu koppelnde, getrennte Schnittstelle 15 integriert werden können.

Es wird somit möglich, eine zuverlässige Kopplung mit einer insbesondere bereits bestehenden Einrichtung 8 für einen analogen Funkbetrieb nach einfacher Entfernung bzw. einem Ersatz einer entsprechenden Bedieneinrichtung zur Verfügung zu stellen, wobei insbesondere keine Änderung an einer bestehenden Hardware oder Software der Einrichtung 8 bzw. der Elemente für einen analogen Funkbetrieb erforderlich sind bzw. werden. Durch Bereitstellen der getrennten Schnittstelle 10 bzw. 15 erfolgt eine Ankopplung und Regelung bzw. Steuerung der Einrichtung 8 für den analogen Funkbetrieb, wie dies vor einer Entfernung der Bedieneinrichtung für den analogen Funkbetrieb vorgenommen wurde, so daß insbesondere eine einfache und kostengünstige Aufrüstung von bestehenden analogen Anlagen 8 unter vollständiger Beibehaltung des Einsatzes bestehender Anlagen für einen analogen Funkbetrieb erfolgen kann, da die Kopplung der bestehenden Anlage 8 für den analogen Funkbetrieb entweder unmittelbar über den für eine Kopplung mit der entfernten Bedieneinrichtung für den analogen Funkbetrieb vorgesehenen Eingang 11 oder eine üblicherweise zusätzlich vorgesehene Schnittstelle bzw. einen zusätzlich vorgesehenen Eingang 16 erfolgt.

Die Kopplung zwischen den einzelnen Elementen erfolgt insbesondere über einen CAN-Bus, so daß entsprechend zuverlässig eine Steuerung einer Mehrzahl von Komponenten bzw. Steuergeräten erfolgen kann.

Durch die Beibehaltung der Funktionen und Eigenschaften des insbesondere bereits bestehenden bzw. vorhandenen Systems 8 für den analogen Funkbetrieb wird eine Kontinuität des Betriebs für den Benutzer zur Verfügung gestellt und es können insbesondere bestehende Einrichtungen, bei Einsatz im Zugfunk bestehende Lokomotiven, Triebwagen, etc. durch eine einfache, zusätzliche Ausrüstung mit einem digitalen Funksystem 1, 2 ergänzt werden, wobei, wie unmittelbar ersichtlich, auch eine entsprechende einfache und zuverlässige Kopplung mit den bestehenden Systemkomponenten 8 über die getrennte Schnittstelle 10 bzw. 15 erfolgt.

## Patentansprüche

1. Verfahren zur Kopplung einer analogen Funkeinrichtung (8) und einer davon getrennten, digitalen Funkeinrichtung (2), insbesondere einer analogen und einer digitalen Zugfunkeinrichtung, welche jeweils ein analoges und digitales Steuergerät beinhalten oder damit verbunden werden, **dadurch gekennzeichnet, daß** die für eine Bedienung erforderlichen Daten, Parameter, etc. über eine gemeinsame, für einen digitalen Betrieb vorgesehene Bedieneinrichtung (1) eingegeben werden und daß die für einen Betrieb der analogen Funkeinrichtung (8) erforderlichen Signale über eine getrennte Schnittstelle (10, 15) dem analogen Steuergerät und/oder der analogen Funkeinrichtung (8) zugeführt werden.

2. Verfahren nach Anspruch 1, **dadurch gekennzeichnet, daß** die für den Betrieb der analogen Funkeinrichtung (8) erforderlichen Signale in Abhängigkeit von den an der Bedieneinrichtung (1) eingegebenen Daten, Parameter, etc. in der Bedieneinrichtung (1) oder in dem digitalen Steuergerät (2) generiert werden und anschließend über die getrennte Schnittstelle (10, 15) dem analogen Steuergerät und/oder der analogen Funkeinrichtung (8) zugeführt werden.

3. Verfahren nach Anspruch 1 oder 2, **dadurch gekennzeichnet, daß** die für einen digitalen Betrieb vorgesehene Bedieneinrichtung (1) und das digitale Steuergerät sowie die digitale Funkeinrichtung (2) mit einer bestehenden analogen Funkeinrichtung (8) und/oder einem bestehenden analogen Steuergerät gekoppelt werden.

4. Verfahren nach Anspruch 3, **dadurch gekennzeichnet, daß** die Eingabe der für den Betrieb der analogen Funkeinrichtung (8) erforderlichen Signale über einen Eingang (11) vorgenommen wird, über welchen die analoge Funkeinrichtung (8) und/oder das analoge Steuergerät ursprünglich mit einer analogen Bedieneinrichtung gekoppelt wurde(n).

5. Verfahren nach einem der Ansprüche 1 bis 4, **dadurch gekennzeichnet, daß** eine Regelung bzw. Steuerung eines gegebenenfalls überlappenden, analogen und digitalen Betriebsmodus, ein Umschalten und ein gegebenenfalls erforderliches Rücksetzen der Funkeinrichtungen (2, 8) in der für die Generierung der für den Betrieb der analogen Funkeinrichtung erforderlichen Signale vorgesehenen Vorrichtung (1, 2) durchgeführt werden.

6. System zur Kopplung einer analogen Funkeinrichtung (8) und einer davon getrennten, digitalen Funkeinrichtung (2), insbesondere einer analogen und einer digitalen Zugfunkeinrichtung, welche jeweils ein analoges und digitales Steuergerät beinhalten oder damit verbindbar sind, **dadurch gekennzeichnet, daß** für eine Übermittlung von für einen Betrieb der analogen Funkeinrichtung (8) erforderlichen Signalen eine getrennte Schnittstelle (10, 15) für eine Kopplung mit dem analogen Steuergerät und/oder der analogen Funkeinrichtung (8) vorgesehen ist.

7. System nach Anspruch 6, **dadurch gekennzeichnet, daß** die Kopplung der analogen Funkeinrichtung (8) bzw. des analogen Steuergeräts mit der digitalen Bedieneinrichtung (1) oder dem digitalen Steuergerät (2) erfolgt.

8. System nach Anspruch 6 oder 7, **dadurch gekennzeichnet, daß** eine bestehende analoge Funkeinrichtung (8) und/oder ein bestehendes analoges Steuergerät mit der digitalen Bedieneinrichtung (1) oder dem digitalen Steuergerät (2) koppelbar bzw. verbindbar ist.

9. System nach einem der Ansprüche 6, 7 oder 8, **dadurch gekennzeichnet, daß** die getrennte Schnittstelle (10, 15) in einer getrennten Hardwareeinheit ausgebildet ist, welche der analogen Funkeinrichtung (8) oder dem analogen Steuergerät vorgeschaltet ist.

10. System nach einem der Ansprüche 6 bis 9, **dadurch gekennzeichnet, daß** für eine Übermittlung von Signalen zwischen der Bedieneinrichtung (1) und den Steuergeräten (2, 8) ein CAN-Bus vorgesehen ist.
